# EUROPÄISCHE PATENTANMELDUNG

(11) **EP 4 068 553 A1**
(43) Veröffentlichungstag der Anmeldung: **05.10.2022**
(21) Anmeldenummer: 21165563.4
(22) Anmeldetag: 29.03.2021
(51) Int. Cl.: H02J 3/18, H02J 3/50

(54) **VERFAHREN ZUM EINSPEISEN ELEKTRISCHER LEISTUNG IN EIN ELEKTRISCHES VERSORGUNGSNETZ**

(71) Anmelder: Wobben Properties GmbH, 26607 Aurich (DE)
(72) Erfinder: Brombach, Johannes, 13437 Berlin (DE)
(74) Vertreter: Eisenführ Speiser

(57) **Zusammenfassung**

Verfahren zum Einspeisen elektrischer Leistung in ein elektrisches Versorgungsnetz mittels mehrerer Einspeisesysteme (301, 302), wobei ein Einspeisesystem als einzelne Einspeiseanlage, insbesondere als Windenergieanlage (311-315), oder als Einspeisepark mit mehreren Einspeiseanlagen, insbesondere als Windpark (301, 302) mit mehreren Windenergieanlagen ausgebildet ist, jedes Einspeisesystem jeweils über einen Anschlussknoten (C1, C2) in das elektrische Versorgungsnetz einen Systemeinspeisestrom (I₁, I₂) einspeist, jede Einspeiseanlage einen Anlagenstrom abgibt, ein Systemeinspeisestrom einem Anlagenstrom entspricht, oder aus mehreren Anlagenströmen zusammengesetzt ist, je nachdem, wie viele Einspeiseanlagen das jeweilige Einspeisesystem aufweist, zwischen jedem der Einspeisesysteme und einem Referenzpunkt im elektrischen Versorgungsnetz jeweils ein Systemübertragungspfad zum Übertragen elektrischer Leistung vorhanden ist, sodass auf jedem Systemübertragungspfad der jeweilige Systemeinspeisestrom übertragen wird, zwischen jeder der Einspeiseanlagen (301, 302) und dem Referenzpunkt (R) im elektrischen Versorgungsnetz (304) jeweils ein Anlagenübertragungspfad zum Übertragen elektrischer Leistung vorhanden ist, sodass auf jedem Anlagenübertragungspfad der Anlagenstrom übertragen wird, die Systemübertragungspfade zwischen einem Verbindungsknoten (C0) und dem Referenzpunkt einen gemeinsamen Pfadabschnitt (310) aufweisen, auf dem sich die Systemeinspeiseströme (I₁, I₂) zu einem Gesamteinspeisestrom (I_{G}) addieren, wenigstens eines oder jedes Einspeisesystem (301, 302) seinen Systemeinspeisestrom (I₁, I₂) in Abhängigkeit von einer Phasenwinkelverschiebung und/oder einem Spannungsabfall zwischen dem Einspeisesystem und dem Referenzpunkt (R) steuert, und/oder wenigstens eine oder jede Einspeiseanlage (311-315), ihren Anlagenstrom in Abhängigkeit von einer Phasenwinkelverschiebung und/oder einem Spannungsabfall zwischen der Einspeiseanlage und dem Referenzpunkt (R) steuert, wobei die Phasenverschiebung bzw. der Spannungsabfall jeweils in Abhängigkeit von dem Gesamteinspeisestrom ermittelt wird.

## Beschreibung

Die vorliegende Erfindung betrifft ein Verfahren zum Einspeisen elektrischer Leistung in ein elektrisches Versorgungsnetz mittels mehrerer Einspeisesysteme. Außerdem betrifft die Erfindung entsprechende Einspeisesysteme. Die Erfindung betrifft auch ein Einspeisesystem einer solchen Anordnung von Einspeisesystemen und die Erfindung betrifft auch eine Einspeiseanlage eines solchen Einspeisesystems.

Einspeisesysteme sind bekannt, sie speisen elektrische Leistung in ein elektrisches Versorgungsnetz ein. Besonders regenerative Energiequellen wie Windenergieanlagen und Photovoltaikanlagen, aber auch elektrische Speichersysteme verwenden zum Einspeisen Umrichter bzw. Wechselrichter. Häufig arbeiten solche Umrichter stromprägend, sie speisen also einen vorgebbaren Strom ein, der somit eingeprägt wird. Nachfolgend umfasst der Begriff "Umrichter" auch immer den Begriff "Wechselrichter".

Bei stromprägenden Umrichtern beeinflusst der eigene eingespeiste Strom die Spannungsreferenz. Variationen des eingespeisten Stroms führen also zu Variationen der Spannung, auf die das jeweilige Einspeisesystem bzw. die jeweilige Einspeiseanlage referenziert. Ist eine Netzimpedanz sehr groß, können kleine Leistungsschwankungen zu großen Änderungen der Phasenlage der Spannungsreferenz führen, welche wiederum eine Anpassung der Stromeinspeisung erfordern. Das kann zu Instabilitäten führen, wenn einer solchen Anpassung oder Veränderung der Stromeinspeisung gegengeregelt wird und ein solches Gegenregeln zu großem Einfluss auf die Referenz führt.

Um solche Instabilitäten zu verhindern, kann vorgesehen sein, dass stromeinspeisende Regelungen nur bis zu einem bestimmten Kurzschlussleistungsverhältnis, das auch als Kurzschlussstromverhältnis bezeichnet werden kann, betrieben werden.

Das Kurzschlussstromverhältnis, das auch als SCR abgekürzt wird, ist das Verhältnis der Kurzschlussleistung zur Anschlussleistung. Hierbei wird unter Kurzschlussleistung diejenige Leistung verstanden, die das betreffende Versorgungsnetz an den betrachteten Netzanschlusspunkt, an dem das Einspeisesystem angeschlossen werden soll, bereitstellen kann, wenn dort ein Kurzschluss auftritt. Die Anschlussleistung ist die Anschlussleistung des anzuschließenden Einspeisesystems, insbesondere die Nennleistung des anzuschließenden Einspeisesystems. Wenn also die Anschlusstopologie des elektrischen Versorgungsnetzes zu dem betrachteten Netzanschlusspunkt vorhanden ist, kann ein großes Kurzschlussstromverhältnis somit nur über eine geringe Anschlussleistung erreicht werden. Mit anderen Worten können dann besonders regenerative Energiequellen nur in entsprechend geringem Umfang angeschlossen werden.

Ein solcher Netzverknüpfungspunkt mit geringem Kurzschlussstromverhältnis, insbesondere eines das kleiner als 2 ist, wird auch als schwacher Netzverknüpfungspunkt bezeichnet. Wenn an einen solchen schwachen Netzverknüpfungspunkt noch ein entsprechend leistungsstarkes Einspeisesystem angeschlossen werden soll, müsste die Netztopologie verändert werden. Es müssten also insbesondere Leitungen mit geringerer Impedanz gezogen werden, um dadurch die Netzimpedanz zu verringern. Solche Maßnahmen sind allerdings sehr kostspielig.

Beispielsweise betrachtet das Dokument US 10,132,294 B2 einen virtuellen Spannungsmesspunkt, um einen stabileren Referenzwert zu erhalten. Dort wird besonders vorgesehen, diesen virtuellen Spannungsmesspunkt in den Windungen eines Transformators anzusiedeln und die Spannung dieses virtuellen Messpunktes zu berechnen. Dadurch soll eine bessere Spannungsbasis geschaffen werden.

Das Problem eines geringen Kurzschlussstromverhältnisses wird dort allerdings nicht adressiert, ebenso wenig wie dadurch potentiell auftretende Instabilitäten der Regelung.

Der vorliegenden Erfindung liegt somit die Aufgabe zugrunde zumindest eins der vorstehend genannten Probleme zu adressieren. Insbesondere soll eine Lösung vorgeschlagen werden, bei der ein stabiler Betrieb wenigstens eines Einspeisesystems an einem schwachen oder weichen Netzverknüpfungspunkt gewährleistet werden kann. Zumindest soll zu bisher bekannten Lösungen eine alternative Lösung vorgeschlagen werden.

Erfindungsgemäß wird ein Verfahren nach Anspruch 1 vorgeschlagen. Demnach ist ein Verfahren zum Einspeisen elektrischer Leistung in ein elektrisches Versorgungsnetz mittels mehrerer Einspeisesysteme vorgesehen. Ein Einspeisesystem kann als einzelne Einspeiseanlage, insbesondere als Windenergieanlage, oder als Einspeisepark mit mehreren Einspeiseanlagen ausgebildet sein, insbesondere als Windpark mit mehreren Windenergieanlagen. Insbesondere sind somit mehrere Windparks vorgesehen, die jeweils mehrere Windenergieanlagen aufweisen. Ein solcher Windpark kann aber auch zusätzlich noch andere Einspeiser beinhalten, insbesondere einen Energiespeicher. Es kommt auch eine Verknüpfung mit anderen Einspeisern, wie beispielsweise Photovoltaikanlagen in Betracht. Bei der bevorzugten Ausführungsform stehen aber die Windenergieanlagen im Vordergrund.

Grundsätzlich kann das Einspeisesystem als einzelne Windenergieanlage vorgesehen sein, sodass jeweils eine Windenergieanlage elektrische Leistung in das elektrische Versorgungsnetz einspeist. Da mehrere Einspeisesysteme vorgesehen sind, sind dann entsprechend mehrere Windenergieanlagen vorhanden. Der bevorzugte Anwendungsfall besteht aber darin, dass jedes Einspeisesystem jeweils einen Windpark mit mehreren Windenergieanlagen bildet. Hier ist besonders von Bedeutung, dass ein solcher Windpark mit mehreren Windenergieanlagen, wie beispielsweise mit 10 oder mehreren Windenergieanlagen, bis hin zu 50 oder noch mehr Windenergieanlagen eine große Anschlussleistung hat und damit auch einen großen Einfluss auf das Verhalten des elektrischen Versorgungsnetzes, zumindest an einem Netzverknüpfungspunkt hat.

Jedes Einspeisesystem speist jeweils über einen Anschlussknoten in das elektrische Versorgungsnetz einen Systemeinspeisestrom ein. Da mehrere Einspeisesysteme vorgesehen sind, sind somit auch mehrere Anschlussknoten vorgesehen. Ein Anschlussknoten kann ein Netzverknüpfungspunkt sein, so dass insbesondere mehrere Netzverknüpfungspunkte vorhanden sind. Es kommt aber auch in Betracht, dass mehrere Anschlussknoten über entsprechende Strompfade zusammengeführt werden, um dann über einen gemeinsamen Netzanschlusspunkt in das elektrische Versorgungsnetz einzuspeisen. Das kommt besonders dann in Betracht, wenn mehrere Einspeisesysteme zusammen einen Windpark bilden, sodass der jeweilige Anschlussknoten einen Knoten noch innerhalb des Windparks bildet.

Jede Einspeiseanlage, also insbesondere jede Windenergieanlage, gibt einen Anlagestrom ab. Ein Systemeinspeisestrom entspricht somit einem Anlagenstrom, wenn das betreffende Einspeisesystem der Einspeiseanlage entspricht, oder ein Systemeinspeisestrom ist aus mehreren Anlageströmen zusammengesetzt, wenn auch das Einspeisesystem mehrere Einspeiseanlagen aufweist. Ein Systemeinspeisestrom ist somit die Summe aller Anlagenströme der Einspeiseanlagen dieses Einspeisesystems.

Zwischen jedem der Einspeisesysteme und einem Referenzpunkt im elektrischen Versorgungsnetz ist jeweils ein Systemübertragungspfad zum Übertragen von elektrischer Leistung vorhanden, sodass auf jedem Systemübertragungspfad der Systemeinspeisestrom übertragen wird. Außerdem ist zwischen jeder Einspeiseanlage und dem Referenzpunkt im elektrischen Versorgungsnetz jeweils ein Anlagenübertragungspfad vorhanden zum Übertragen elektrischer Leistung, sodass auf jedem Anlagenübertragungspfad der Anlagenstrom übertragen wird.

Sind beispielsweise als Einspeisesysteme jeweils zwei Windparks vorhanden, die jeweils zwei Windenergieanlagen als Einspeiseanlagen aufweisen, sind somit vier Windenergieanlagen, also vier Einspeiseanlagen vorhanden und damit vier Anlagenübertragungspfade. Gleichzeitig sind zwei Systemübertragungspfade vorhanden. Diese Anlagenübertragungspfade und Systemübertragungspfade überschneiden sich teilweise und führen letztlich alle zu dem einen Referenzpunkt im elektrischen Versorgungsnetz.

Die Systemübertragungspfade weisen zwischen einem Verbindungsknoten und dem Referenzpunkt einen gemeinsamen Pfadabschnitt auf, auf dem sich die Systemeinspeiseströme zu einem Gesamteinspeisestrom addieren. Damit addieren sich dort auch alle Anlagenströme zu dem Gesamteinspeisestrom. In diesem gemeinsamen Pfadabschnitt treten somit nicht nur die Systemübertragungspfade gemeinsam auf, sondern auch alle Anlagenübertragungspfade. Der Verbindungsknoten kann somit den Knoten bilden, an dem alle Ströme zusammenkommen. All die Ströme, die an dem Verbindungsknoten zusammenkommen, können daher auch als Knotenströme bezeichnet werden.

Weiterhin ist vorgesehen, dass jedes Einspeisesystem, oder zumindest eines davon, seinen Systemeinspeisestrom in Abhängigkeit von einer Phasenwinkelverschiebung und/oder einem Spannungsabfall zwischen dem Einspeisesystem und dem Referenzpunkt steuert.

Außerdem oder alternativ ist vorgesehen, dass jede Einspeiseanlage, oder zumindest eine davon, ihren Strom in Abhängigkeit von einer Phasenwinkelverschiebung und/oder einem Spannungsabfall zwischen der Einspeiseanlage und dem Referenzpunkt steuert. Das Verfahren sieht besonders vor, dass jedes Einspeisesystem bzw. jede Einspeiseanlage wie beschrieben arbeitet, um das Potential der Erfindung möglichst vollständig auszuschöpfen, aber wenn sich nicht alle diese Einspeisesysteme bzw. Einspeiseanlagen beteiligen, kann durch die übrigen, die das Verfahren umsetzen, dennoch ein vorteilhafter Effekt erzielt werden. Möglichst sollten dabei auch die Ströme der Einspeisesysteme bzw. Einspeiseanlagen, die sich nicht beteiligen, berücksichtigt werden.

In jedem Fall wird also eine Phasenwinkelverschiebung zwischen dem Verbindungsknoten und dem Referenzpunkt betrachtet und außerdem oder alternativ wird ein Spannungsabfall zwischen dem Verbindungsknoten und dem Referenzpunkt betrachtet. Beides hängt von dem Strom auf dem gemeinsamen Pfadabschnitt ab. Dieser Strom ist die Summe aller Systemeinspeiseströme und damit auch die Summe aller Anlagenströme. Das Steuern des Einspeisesystems bzw. das Steuern eines Systemeinspeisestroms als auch das Steuern der Einspeiseanlage bzw. ihres Anlagenstroms hängt somit jeweils von allen Systemeinspeiseströmen bzw. von allen Anlagenströmen ab. Sollten an dem gemeinsamen Pfadabschnitt noch andere Ströme von anderen Erzeugern eingespeist werden oder von anderen Verbrauchern verbraucht werden, so wären diese bzw. ihre Auswirkungen zusätzlich mit zu berücksichtigen.

Der Einfachheit halber kann zunächst der Fall betrachtet werden, dass nur diese Systemeinspeiseströme bzw. Anlagenströme auf den gemeinsamen Pfadabschnitt fließen. Somit wird vorgeschlagen, dass die Phasenverschiebung bzw. der Spannungsabfall jeweils in Abhängigkeit von dem Gesamteinspeisestrom ermittelt wird. Die Phasenverschiebung bzw. der Spannungsabfall wird somit in Abhängigkeit aller Anlagenströme bzw. aller Systemeinspeiseströme ermittelt.

Dadurch kann die Auswirkung all dieser Ströme bis zum Referenzpunkt berücksichtigt werden. Die Spannung am Referenzpunkt sollte im Wesentlichen und/oder meistens stabil sein. Durch die gute Kenntnis all dieser Ströme oder ihrer Auswirkungen kann von den weniger stabilen Spannungen an den Einspeisesystemen bzw. an den Einspeiseanlagen auf diese Spannung am Referenzpunkt mit guter Genauigkeit geschlossen werden. Dadurch können sich die Einspeisesysteme bzw. Einspeiseanlagen an einer stabilen Spannung am Referenzpunkt orientieren. Besonders wurde erkannt, dass ein Betrieb an extrem weichen Netzverknüpfungspunkten eine stabile Kenntnis der Referenz erfordern kann. Somit kann hier eine stabile Kenntnis der Spannung am Referenzpunkt und/oder des Phasenwinkels am Referenzpunkt erfasst und berücksichtigt werden. Dadurch ist eine stabile Regelung der einzuspeisenden Ströme möglich.

Hier wurde besonders auch erkannt, dass die Berücksichtigung eines Einspeisesystems alleine, also besonders nur die Berücksichtigung eines einzigen Einspeisestroms zu einer instabilen Regelung führen kann, weil die Auswirkungen der Spannungsänderungen der übrigen Einspeiseströme nicht berücksichtigt werden, obwohl sie aber häufig nicht vernachlässigbar sind. Durch die Betrachtung der insgesamt resultierenden Phasenverschiebung bzw. dem insgesamt resultierenden Spannungsabfall und damit der Berücksichtigung des Gesamteinspeisestroms wird zu dem genannten Problem eine Lösung angeboten. Jetzt kann die gesamte Auswirkung auf die Phasenverschiebung bzw. den Spannungsabfall in der Regelung berücksichtigt werden und damit eine stabile Regelung beim Einspeisen erreicht werden. Damit kann insgesamt eine stabile Einspeisung auch bei sehr schwachen bzw. bei sehr weichen Netzverknüpfungspunkten erreicht werden.

Gemäß einem Aspekt wird vorgeschlagen, dass jeder Anschlussknoten als Netzanschlusspunkt ausgebildet ist und/oder die Einspeisesysteme und die Einspeiseanlagen umrichtergesteuert sind und stromprägend arbeiten.

Dadurch, dass jeder Anschlussknoten als Netzanschlusspunkt ausgebildet ist, werden somit Einspeisesysteme betrachtet, die an unterschiedlichen Netzanschlusspunkten in das elektrische Versorgungsnetz einspeisen. Für diese Konstellation wird somit vorgeschlagen, dass die Systemeinspeiseströme, die also an unterschiedlichen Netzanschlusspunkten eingespeist werden, berücksichtigt werden. Diese Systemeinspeiseströme addieren sich somit erst im elektrischen Versorgungsnetz zu einem Gesamteinspeisestrom, nämlich besonders am Verbindungsknoten, und dennoch wird vorgeschlagen, sie zu berücksichtigen, zumindest über den Gesamteinspeisestrom. Das bedeutet somit auch, dass der Verbindungsknoten im elektrischen Versorgungsnetz angeordnet ist, also zwischen dem Referenzpunkt und den Netzanschlusspunkten.

Hier wurde erkannt, dass das Verhalten des entsprechenden Abschnitts im elektrischen Versorgungsnetz in Abhängigkeit von dem jeweiligen Strom relevant sein kann und dass dieses entsprechend berücksichtigt wird. Die Berücksichtigung macht also erforderlich, dass der Effekt berücksichtigt wird, der sich durch das Addieren der Systemeinspeiseströme in dem elektrischen Versorgungsnetz einstellt.

Besonders deswegen werden Einspeisesysteme und Einspeiseanlagen verwendet und damit berücksichtigt, die umrichtergesteuert sind und Stromprägend arbeiten. Diese Einspeisesysteme bzw. Einspeiseanlagen geben somit jeweils einen Einspeisestrom vor. Dieser führt zu einer entsprechenden Spannung an dem entsprechenden Pfad bzw. eine Änderung des jeweiligen vorgegebenen Einspeisestrom führt zu einer entsprechenden Spannung des entsprechenden Strompfades. Diese Änderungen hängen aber nicht nur von dem einen eingespeisten Strom ab, sondern auch von den übrigen eingespeisten Strömen, die sich letztlich zu dem Gesamteinspeisestrom addieren.

Es ist dazu erkannt worden, dass es zweckmäßig ist, dieses stromprägende Einspeisen, also das Vorgeben des jeweiligen Einspeisestroms, im Hinblick auf die Spannungsantwort zu steuern. Dabei wird nicht nur die Spannungsantwort des jeweils zu steuernden Einspeisestroms berücksichtigt, sondern auch die Spannungsantwort, die sich durch die übrigen Einspeiseströme ergibt. Diese Gesamtbetrachtung schafft eine gezielte Vorgabe des Einspeisestroms unter Einhaltung der Stabilität. Es kann also grundsätzlich vergleichsweise viel Leistung eingespeist werden, die aber aufgrund der gezielten Berücksichtigung der Spannungseffekte nicht zu Instabilität führen muss. Dadurch kann eine Einspeisung bei geringem Kurzschlussstromverhältnis erreicht werden.

Vorteilhaft ist es somit, wenn alle Einspeiseanlagen und damit alle Einspeisesysteme umrichtergesteuert sind und insbesondere stromprägend arbeiten. Der vorgeschlagene Vorteil kann aber natürlich auch erreicht werden, wenn eine spannungsprägend einspeisende Einspeiseanlage darunter ist, oder auch mehrere. Besonders gut ist der beschriebene Zweck erzielbar, wenn das stromprägende Arbeiten zumindest dominiert.

Es wird vorgeschlagen, dass wenigstens 50 % der Einspeiseanlagen, bezogen auf ihre Nennleistung, stromprägend arbeiten, insbesondere wenigstens 80 % der Einspeiseanlagen bezogen auf ihre Nennleistung stromprägend arbeiten. Dadurch kann dieser Effekt erzielt werden, weil das stromprägende Arbeiten dann ausreichend dominant sein kann.

Gemäß einem Aspekt wird vorgeschlagen, dass wenigstens eines der Einspeisesysteme seinen Systemeinspeisestrom in Abhängigkeit von der Phasenwinkelverschiebung und/oder in Abhängigkeit von dem Spannungsabfall zwischen dem Einspeisesystem und dem Referenzpunkt dadurch steuert, dass jede Einspeiseanlage des Einspeisesystems ihren Anlagenstrom in Abhängigkeit von einer Phasenwinkelverschiebung und/oder einem Spannungsabfall zwischen der jeweiligen Einspeiseanlage und dem Referenzpunkt steuert. Hier wird also besonders vorgeschlagen, dass die Einspeiseanlagen die Steuerung umsetzen.

Sie können dazu ihren eigenen Anlagenstrom und die Anlagenströme der übrigen Einspeiseanlagen berücksichtigen, oder auch andere möglicherweise schon gebündelte Ströme, oder die Systemeinspeiseströme berücksichtigen.

Besonders bei der Berücksichtigung aller übrigen Anlagenströme kann eine umfassende Kommunikation zwischen den Einspeiseanlagen sinnvoll sein. Hierdurch kann ein vergleichsweise großer Kommunikationsaufwand entstehen, der aber durch das angestrebte Ziel gerechtfertigt sein kann. Vorteilhaft an der Verwendung der Einspeiseanlagen, also insbesondere der einspeisenden Windenergieanlagen ist, dass diese auf Netzreaktionen oder auch Netzvorfälle möglicherweise schneller reagieren können, als wenn eine zentrale Steuerung in jedem Einspeisesystem zusätzlich verwendet werden müsste. Wenn das Einspeisesystem ein Windpark ist, kann eine solche zentrale Steuerung also ein Windparkregler sein bzw. auf einen Windparkregler implementiert sein.

Die Einspeiseanlagen kennen dann beispielsweise alle Anlagenströme und können basierend auf dieser Kenntnis dennoch sehr schnell reagieren, wenn ein Spannungsereignis im Netz auftritt, oder auch ein Frequenzereignis, auf das reagiert werden muss. Besonders in der Annahme, dass die übrigen Einspeiseanlagen ein solches Spannungsereignis und/oder Frequenzereignis in gleicher Weise oder ähnlicher Weise wahrnehmen, wie die übrigen Einspeiseanlagen, und sich auch gleich oder ähnlich verhalten, kann dieses Verhalten und damit eine zu erwartende Änderung aller Anlagenströme bei der Steuerung entsprechend antizipiert werden.

Durch die Verwendung der Einspeiseanlagen zum Steuern des vorgeschlagenen Einspeisens ist somit in jedem Fall eine sehr schnelle und gleichzeitig gut kontrollierte Reaktion möglich.

Gemäß einem Aspekt wird vorgeschlagen, dass zur Erfassung der Phasenwinkelverschiebung bzw. des Spannungsabfalls in Abhängigkeit von dem Gesamteinspeisestrom Informationen zu den Systemeinspeiseströmen zwischen den Einspeisesystemen ausgetauscht werden und/oder Informationen zu den Anlageströmen zwischen den Einspeiseanlagen ausgetauscht werden und/oder der Gesamteinspeisestrom messtechnisch erfasst wird. Besonders wenn die Einspeisesysteme das Einspeisen steuern, können Sie untereinander entsprechende Informationen zu den Systemeinspeiseströmen austauschen. Das vermeidet, dass ein entsprechender Stromsensor zusätzlich ergänzt werden muss. Besonders vorteilhaft bei der Verwendung einer Stromprägung, was hier als allgemeine Aussage zu verstehen ist, ist auch, dass ein entsprechender Systemeinspeisestrom oder Anlagenstrom je nachdem wo diese Stromprägung durchgeführt wird, für diese Stromprägung ohnehin erfasst wird. Dadurch liegt ein guter Wert vor, der dann nur noch zwischen den Einspeisesystemen kommuniziert zu werden braucht.

Gleiches gilt, wenn Informationen zu den Anlagenströmen zwischen den Einspeiseanlagen ausgetauscht werden. Die Einspeiseanlagen kennen meist ihren eigenen Anlagenstrom und besonders, wenn sie stromprägend arbeiten erfassen sie diesen, um die Stromprägung entsprechend steuern zu können. Der Strom ist also bekannt und entsprechende Informationen brauchen nur ausgetauscht zu werden.

Insbesondere wird, was für alle Aspekte gilt, zum Einspeisen ein Toleranzbandverfahren verwendet. Bei diesem erfolgt ständig eine Erfassung des eingespeisten Stroms und dieser kann entsprechend berücksichtigt werden, insbesondere zwischen den Einspeiseanlagen ausgetauscht werden.

Dennoch ist es auch möglich, den Gesamteinspeisestrom messtechnisch zu erfassen. Dazu ist ein entsprechender messtechnischer Aufwand erforderlich, der aber je nach Situation gerechtfertigt sein kann. Besonders dann, wenn Einspeisesysteme großer Leistung an vergleichsweise schwachen Netzabschnitten angeschlossen werden, sodass sich ein geringes Kurzschlussstromverhältnis ergibt, kann das Vorsehen eines entsprechenden Stromsensors oder mehrerer Stromsensoren, vergleichsweise günstig sein im Vergleich zu einem ansonsten notwendigen Ausbau des betreffenden Netzabschnitts, um dadurch das Kurzschlussstromverhältnis zu erhöhen.

Gemäß einem Aspekt wird vorgeschlagen, dass jeweils für ein Einspeisesystem und/oder für eine Einspeiseanlage eine Phasenwinkelsensitivität bestimmt wird, die ein Verhältnis einer Veränderung des Systemeinspeisestroms bzw. des Anlagenstroms zur resultierenden Phasenwinkelverschiebung angibt. Dazu wird weiter vorgeschlagen, dass der Systemeinspeisestrom bzw. der Anlagenstrom jeweils in Abhängigkeit von der jeweils erfassten Phasenwinkelverschiebung und der jeweils bestimmten Phasenwinkelsensitivität gesteuert wird. Die Phasenwinkelsensitivität beschreibt also, wie sensitiv der Phasenwinkel auf eine Veränderung des Systemeinspeisestroms reagiert. Die Phasenwinkelsensitivität kann beispielsweise in Grad angegeben werden, wenn sie sich auf eine normierte Veränderung des Systemeinspeisestroms bzw. Anlagenstroms bezieht. Die Veränderung des Systemeinspeisestroms bzw. des Anlagenstroms kann auf einen Nennwert des betreffenden Systemeinspeisestroms bzw. des betreffenden Anlagenstroms normiert sein. Beträgt also die Phasenwinkelsensitivität beispielsweise 10 Grad, so bedeutet das, dass der Phasenwinkel sich um 10 Grad verändert, wenn der Systemeinspeisestrom bzw. der Anlagenstrom sich von null auf den betreffenden Nennwert ändert, oder umgekehrt.

Besonders kann die Steuerung so vorgesehen sein, dass die Phasenwinkelverschiebung als Eingangsgröße berücksichtigt wird und abhängig davon, der Systemeinspeisestrom bzw. der Anlagenstrom eingestellt wird, während die Berücksichtigung der Phasenwinkelsensitivität über eine Einstellung der Steuerungsdynamik berücksichtigt wird. Insbesondere wird vorgeschlagen, dass der Systemeinspeisestrom bzw. der Anlagenstrom in Abhängigkeit von der Phasenwinkelverschiebung mittels einer Stromregelung mit einer Reglerverstärkung gesteuert wird, und dass die Reglerverstärkung dem Betrage nach mit zunehmender Phasenwinkelsensitivität verringert wird. Bei hoher Phasenwinkelsensitivität reagiert eine solche Stromregelung somit etwas sanfter oder zurückhaltender. Bei geringer Phasenwinkelsensitivität kann sie stärker reagieren. Hierdurch wird besonders vermieden, dass bei einem schwachen Netz bzw. geringen Kurzschlussstromverhältnis, bei dem eine höhere Phasenwinkelsensitivität auftritt, durch eine zu starke Reglerreaktion der Stromregelung eine Instabilität erreicht wird, nämlich eine zu starke Reaktion der Spannung am Referenzpunkt erreicht wird. Eine Überreaktion wird damit vermieden.

Hier wurde erkannt, dass eine solche Phasenwinkelsensitivität besonders durch einen gemeinsamen Netzabschnitt und damit besonders durch den gemeinsamen Pfadabschnitt zwischen Verbindungsknoten und Referenzpunkt dominiert sein kann. Das liegt besonders daran, dass die Leitungen zumindest zwischen jedem Einspeisesystem bzw. den Einspeiseanlagen einerseits und dem Anschlussknoten andererseits gut ausgebaut sind, denn sie werden häufig zusammen mit dem entsprechenden Einspeisesystem bzw. den Einspeiseanlagen aufgebaut und sind daher selten zu schwach dimensioniert.

Das kann dazu führen, dass die Phasenwinkelsensitivitäten zwischen den Einspeisesystemen bzw. den Einspeiseanlagen vergleichsweise ähnlich sind. Das führt wiederum dazu, dass jedes Einspeisesystem bzw. jede Einspeiseanlage, die ihre Phasenwinkelsensitivität berücksichtigen, damit auch die übrigen Phasenwinkelsensitivitäten berücksichtigen. Mit anderen Worten ist häufig damit zu rechnen, dass alle Phasenwinkelsensitivitäten ähnlich stark oder ähnlich schwach sind. Entsprechend alle Einspeisesysteme bzw. Einspeiseanlagen ihre Steuerung auf etwa gleich große oder gleich kleine also gleich starke oder gleich schwache Phasenwinkelsensitivitäten abgestimmt haben.

Um diese vereinfachende Vermutung zu verbessern kommt vorzugsweise in Betracht, Informationen über Phasenwinkelsensitivitäten zwischen den Einspeisesystemen bzw. zwischen den Einspeiseanlagen auszutauschen.

Gemäß einem Aspekt wird vorgeschlagen, dass das Steuern des Systemeinspeisestroms und/oder des Anlagenstroms jeweils so erfolgt, dass die Phasenwinkelverschiebung wenigstens ein Verschiebungsgrenzkriterium einhält. Hier kommt besonders in Betracht, dass die Phasenwinkelverschiebung entsprechend erfasst wird und die Steuerung angepasst wird, wenn ein Verschiebungsgrenzkriterium erreicht wird oder ein Verlauf anzeigt, dass ohne Eingriff ein Verschiebungsgrenzkriterium überschritten werden könnte.

Insbesondere wird vorgeschlagen, dass die Phasenwinkelverschiebung dem Betrage nach einen Verschiebungsmaximalwert nicht überschreitet. Der Verschiebungsmaximalwert ist somit ein absoluter Grenzwert, der für die Phasenwinkelverschiebung als betragsmäßige Obergrenze vorgegeben wird. Erfolgt also eine Erhöhung des Systemeinspeisestroms oder Anlagenstroms derart, dass sich eine Phasenwinkelverschiebung erhöht, die diesen Maximalwert zu überschreiten droht, kann entsprechend das Einspeisen des Systemeinspeisestroms bzw. des Anlagenstroms verringert oder anderweitig angepasst werden.

Beim einfachsten Fall wird eine Erhöhung der Stromeinspeisung in dem Moment angehalten, in dem die Phasenwinkelverschiebung den Grenzwert erreicht. Ein solches Erreichen eines Grenzwertes kann aber auch bereits im Vorfeld erkannt werden. Wird beispielsweise der Einspeisestrom anhand einer zeitabhängigen Rampe erhöht, erhöht sich die Phasenwinkelverschiebung entsprechend proportional dazu und es ist somit leicht erkennbar, welchen Maximalwert die Phasenwinkelverschiebung erreicht, wenn der eingespeiste Strom das Ende der genannten Rampe erreicht hat.

Außerdem oder alternativ ist vorgesehen, dass die Phasenwinkelverschiebung dem Betrage nach eine maximale Verschiebungsänderungsrate nicht überschreitet. Eine solche maximale Verschiebungsänderungsrate ist somit ein Verschiebungsgrenzkriterium. Wird also, um bei dem Beispiel zu bleiben, der eingespeiste Strom gemäß einer Rampe erhöht, führt dies zu einer Phasenwinkelverschiebung gemäß einer proportionalen Rampe. Ist die Steigung dieser Rampe dem Betrage nach zu hoch, kann entsprechend die Rampe des eingespeisten Stromes abgeflacht werden, um die Rampe der Phasenwinkelverschiebung abzuflachen.

All diese Grenzen können natürlich, sowohl für die Absolutwerte als auch für die Betrachtung der Änderungsrate, auch bei negativen Änderungen berücksichtigt werden. Daher werden die Maximalwerte bzw. die zu prüfenden Phasenwinkelverschiebungen dem Betrage nach betrachtet. Es ist also auch ungünstig, wenn die Phasenwinkelverschiebung zu stark oder zu schnell abfällt.

Durch diese Grenzvorgaben kann eine zu starke oder zu schnelle Veränderung der Phasenwinkelverschiebung und damit eine zu starke oder zu schnelle Änderung des betreffenden Phasenwinkels am Referenzpunkt vermieden werden. Damit wird besonders ein Problem adressiert, das bei schwachen Netzabschnitten auftreten kann, besonders nämlich bei geringen Kurzschlussstromverhältnissen. Die Lösung ermöglicht dabei trotzdem eine möglichst große Stromeinspeisung und daher das Anschließen möglichst großer Einspeisesysteme bzw. Einspeiseanlagen.

Gemäß einem Aspekt wird vorgeschlagen, dass das Steuern der Systemeinspeiseströme und/oder der Anlagenströme zentral koordiniert wird. Dadurch kann erreicht werden, dass alle relevanten Ströme, also Systemeinspeiseströme bzw. Anlagenströme nicht nur berücksichtigt, sondern auch gesteuert werden und die gesamte Reaktion der Spannung, insbesondere am Referenzpunkt bzw. der Spannungsabfall und/oder die Phasenwinkelverschiebung kann genau gesteuert werden. Dadurch ist eine hohe Stabilität erreichbar, während gleichzeitig bei einem geringen Kurzschlussstromverhältnis vergleichsweise viel Leistung eingespeist werden kann bzw. vergleichsweise große Einspeisesysteme oder Einspeiseanlagen angeschlossen werden können.

Eine solche zentrale Steuerung kann z. B. so erfolgen, dass in jedem Einspeisesystem, insbesondere Windpark, jeweils eine zentrale Parksteuerung vorhanden ist und diese Parksteuerungen untereinander koordiniert sind. Dabei kann eine der Parksteuerungen zum Steuern der Systemeinspeiseströme oder Anlagenströme eine übergeordnete Steuerung übernehmen. Eine Umsetzung einer solchen zentralen Steuerung kann dadurch erreicht werden, dass in dieser zentralen Steuerung entsprechende Istwerte, besonders von den Strömen, aber auch der relevanten Spannung, gesammelt werden und davon abhängig Sollwerte an die einzelnen Einspeisesysteme bzw. Einspeiseanlagen gegeben werden. Es kann auch eine kaskadierte Struktur vorgesehen sein, in der eine zentrale Steuereinheit Sollwerte an Steuereinheiten jedes Einspeisesystems gibt und jedes Einspeisesystem daraus Sollwerte erzeugt und an ihre Einspeiseanlagen verteilt.

Eine solche zentrale Parksteuerung ist jeweils für einen Windpark vorgesehen. Sie kann aber auch für ein Einspeisesystem vorgesehen sein, das kein Windpark ist oder das einen Windpark beinhaltet. Ebenso kann eine solche zentrale Parksteuerung natürlich für einen Windpark vorgesehen sein, der zusätzlich zu Windenergieanlagen noch weitere Einspeiser enthält, wie zum Beispiel einen elektrischen Speicher.

Insbesondere kann das Steuern der Zentrale so koordiniert werden, dass eine Phasenwinkelveränderung am Referenzpunkt wenigstens ein Winkelgrenzkriterium einhält. Durch das zentrale Koordinieren kann besonders vermieden werden, dass bei Erreichen des Winkelgrenzkriteriums alle Einspeisesysteme bzw. alle Einspeiseanlagen einzeln reagieren und damit in Summe überreagieren.

Insbesondere ist vorgesehen, dass die Phasenwinkelveränderung dem Betrage nach einen Winkelmaximalwert nicht überschreitet und/oder dass die Phasenwinkelveränderung dem Betrage nach eine maximale Winkeländerungsrate nicht überschreitet. Entsprechend kann eine absolute Grenze am Referenzpunkt vorgesehen sein oder alternativ oder zusätzlich eine relative Grenze, die eine zu schnelle Veränderung verhindert. Die Einhaltung dieser Grenzen kann zentral koordiniert werden, um ein genaues und stabiles Einspeisen zu erreichen.

Gemäß einem Aspekt wird vorgeschlagen, dass zum Steuern der Systemeinspeiseströme und/oder der Anlagenströme eine zentrale Stromreferenzgröße vorgegeben wird, wobei jeder Systemeinspeisestrom bzw. jeder Anlagenstrom in Abhängigkeit von dieser Stromreferenzgröße vorgegeben wird. Dadurch kann eine zentrale Steuerung der Einspeiseströme erreicht werden, mit den oben bereits beschriebenen Vorteilen. Dabei wird hier besonders vorgeschlagen, nicht nur eine zentrale Koordinierung vorzunehmen, sondern gezielt jeden einzelnen Systemeinspeisestrom bzw. Anlagenstrom vorzugeben. Dadurch ist eine vollständige Steuerung der Ströme und damit auch des Gesamteinspeisestroms möglich. Ein solcher Vorschlag kann einen erhöhten Kommunikationsaufwand zwischen den Einheiten erforderlich machen. Es wird daher besonders vorgeschlagen, schnelle Kommunikationsverbindungen, insbesondere direkte Kommunikationswege, seien sie nun leitungsgebunden oder per Funk, vorzusehen. Auch hier wurde erkannt, dass ein solcher Aufwand dennoch vergleichsweise sehr gering sein kann im Vergleich zu einem Aufwand, eine Netzimpedanz durch entsprechenden Ausbau des elektrischen Versorgungsnetzes zu ändern.

Die zentrale Stromreferenzgröße kann somit ein einheitlicher Wert für alle Einspeisesysteme oder Einspeiseanlagen sein. Er kann beispielsweise ein prozentualer Wert sein, der den einzuspeisenden Strom in Bezug auf den jeweiligen Nennstrom angibt. Haben die Einspeisesysteme bzw. Anlagen unterschiedliche Nennströme, ergeben sich somit trotz gleicher zentraler Stromreferenzgröße unterschiedliche absolute Stromwerte. Dadurch kann auf einfache Art und Weise zentral koordiniert ein einzelner Strom für jedes Einspeisesystem bzw. jede Einspeiseanlage vorgegeben werden.

Vorzugsweise gibt die Stromreferenzgröße für alle Systemeinspeiseströme und/oder für alle Anlagenströme einen Stromphasenwinkel vor. Ein solcher Stromphasenwinkel kann unabhängig von der Größe des jeweiligen Einspeisesystems bzw. der jeweiligen Einspeiseanlage den gleichen Wert aufweisen. Damit kann insbesondere ein Blindleistungsanteil insgesamt also für den Gesamteinspeisestrom zentral gesteuert werden. Damit ist ein solcher Blindleistungsanteil entsprechend genau umsetzbar.

Gemäß einer Ausgestaltung wird vorgeschlagen, dass die zentrale Stromreferenzgröße nur diesen Stromphasenwinkel vorgibt, wohingegen die jeweilige Höhe des Systemeinspeisestroms bzw. Anlagenstroms durch das Einspeisesystem bzw. die Einspeiseanlage jeweils individuell vorgegeben wird. Dazu kann gleichwohl eine zentrale Führungsgröße ausgegeben werden. Insbesondere kann, das gilt für jegliche Ausführungsformen, eine Spannung nach Betrag und Phase an den Referenzknoten ermittelt und allen Einspeisesystemen bzw. Einspeiseanlagen zur Referenzierung bereitgestellt werden.

Gemäß einem Aspekt wird vorgeschlagen, dass alle Systemeinspeiseströme der Einspeisesysteme erfasst und als Information an die jeweils übrigen Einspeisesysteme übertragen werden, und/oder dass einige oder alle Anlagenströme der Einspeiseanlagen erfasst und als Information an einige oder alle der Einspeiseanlagen und/oder an die Einspeisesysteme übertragen werden, sodass das Steuern der Systemeinspeiseströme und/oder der Anlagenströme jeweils in Abhängigkeit von den übrigen Systemeinspeiseströmen bzw. Anlagenströmen durchgeführt wird. Es wird somit vorgeschlagen, sämtliche relevanten Ströme zu erfassen und die Daten zwischen den Einspeisesystemen bzw. Einspeiseanlagen auszutauschen. Wenn die Anlagenströme erfasst werden, kann es sinnvoll sein, diese nicht nur an die übrigen Einspeiseanlagen zu übertragen, sondern auch an die Einspeisesysteme. Die Einspeisesysteme können aus den relevanten Anlagenströmen den jeweiligen Systemeinspeisestrom ermitteln, nämlich die Systemeinspeiseströme der übrigen Einspeisesysteme. Eine Variante ist somit, dass nur über die Erfassung der Anlagenströme die Einspeisesysteme die Systemeinspeiseströme aller Einspeisesysteme kennen und entsprechend für das Steuern der Systemeinspeiseströme verwenden können.

Dadurch ist eine entsprechend genaue Regelung möglich, die ein stabiles Einspeisen auch bei niedrigen Kurzschlussstromverhältnissen erreichen kann.

Gemäß einem Aspekt wird vorgeschlagen, dass wenigstens eines der Einspeisesysteme, oder alle Einspeisesysteme ein Kurzschlussstromverhältnis kleiner als 2 aufweist bzw. aufweisen und/oder dass alle Einspeisesysteme zusammen in Bezug auf den Verbindungsknoten ein Kurzschlussstromverhältnis kleiner 2 aufweisen.

Somit wird ausdrücklich das vorgeschlagene Verfahren zum Einspeisen elektrischer Leistung für eine Konstellation mit sehr kleinem Kurzschlussstromverhältnis eingesetzt. Damit kann eine solche Konstellation effektiv genutzt werden, insbesondere kann vergleichsweise viel Leistung eingespeist werden und es können Einspeisesysteme oder Einspeiseanlagen, insbesondere Windparks und Windenergieanlagen, mit vergleichsweise hoher Nennleistung angeschlossen werden.

Das Verfahren ist aber auch dann vorteilhaft, wenn Einspeisesysteme mit einem entsprechend kleinen Kurzschlussstromverhältnis angeschlossen sind, aber zusätzlich beispielsweise ein weiteres Einspeisesystem angeschlossen ist, das kein so kleines Kurzschlussstromverhältnis aufweist. Es kann aber den Gesamteinspeisestrom beeinflussen und sollte daher berücksichtigt werden. Dass ein Einspeisesystem kein kleines Kurzschlussstromverhältnis aufweist, kann besonders auch bedeuten, dass dieses Einspeisesystem zwar auch über einen vergleichsweise schwachen Netzabschnitt angeschlossen ist, insbesondere nämlich über den selben wie die übrigen Einspeisesysteme, selbst aber nur sehr klein dimensioniert ist. Er sollte dennoch berücksichtigt werden.

Besonders dann, wenn der Verbindungsknoten den Netzanschlusspunkt für alle Einspeisesysteme bildet, wird vorzugsweise auf ihn das Kurzschlussstromverhältnis bezogen. Es kommt aber auch in Betracht, dass der Verbindungsknoten nicht den gemeinsamen Netzanschlusspunkt bildet, sondern weiter im elektrischen Versorgungsnetz liegt. Das Kurzschlussstromverhältnis an einem solchem Verbindungsknoten bzw. bezogen auf einen solchen Verbindungsknoten, kann trotzdem relevant sein. Es wurde nämlich erkannt, dass es besonders auf die Auslegung des gemeinsamen Pfadabschnittes zwischen dem Referenzpunkt und dem Verbindungsknoten ankommt, um die Stärke dieses Anschlusses für die Einspeisesysteme zu bewerten und zu berücksichtigen. Daher wird vorgeschlagen, das Kurzschlussstromverhältnis bezogen auf diesen Verbindungsknoten zu berücksichtigen.

Gemäß einem Aspekt wird vorgeschlagen, dass jeweils einer der Systemeinspeiseströme und/oder einer der Anlagenströme zusätzlich in Abhängigkeit von wenigstens einem weiteren Einspeiser, der einen Einspeisestrom an den gemeinsamen Pfadabschnitt einspeist, und/oder in Abhängigkeit von wenigstens einem Verbraucher, der einen Verbrauchsstrom aus dem gemeinsamen Pfadabschnitt erhält, gemeinsam gesteuert wird. Hier wurde besonders erkannt, dass ein solcher weiterer Einspeiser und/oder ein solcher Verbraucher den Gesamteinspeisestrom, also den Strom auf einem Übertragungsabschnitt zwischen den Verbindungsknoten und dem Referenzpunkt, beeinflussen kann. Werden also diese zusätzlichen Ströme die zufließen oder abfließen, nicht berücksichtigt, kann die Spannung am Referenzpunkt nicht oder nur mit einer entsprechenden Ungenauigkeit erfasst werden. Das hätte zur Folge, dass der Referenzpunkt in Richtung zum Verbindungsknoten verschoben werden müsste, nämlich soweit, dass diese zusätzlichen zu- oder abfließenden Ströme keinen Einfluss mehr haben.

Es wurde aber erkannt, dass das vorgeschlagene Verfahren besonders gut funktioniert, je weiter der Referenzpunkt zu einem Netzschwerpunkt hin angeordnet ist. Es wird daher vorgeschlagen, diesen Referenzpunkt soweit wie möglich zu einem solchen Netzschwerpunkt zu verschieben und das wird dadurch möglich, dass zusätzlich zu- oder abfließende Ströme, die dadurch relevant werden, berücksichtigt werden.

Gemäß einem Aspekt wird vorgeschlagen, dass als Referenzpunkt ein Netzknoten ausgewählt wird, der möglichst nah an einem Netzschwerpunkt ist, und dessen Spannung und Phasenwinkel in Abhängigkeit von den Einspeiseströmen und/oder Anlagenströmen und gegebenenfalls weiteren Bekannten zwischen dem Verbindungsknoten und Referenzknoten zu- oder abfließenden Strömen berechnet werden kann. Der Netzschwerpunkt beschreibt einen Knoten im elektrischen Versorgungsnetz, an dem ein mittlerer Phasenwinkel auftritt, der zu allen Phasenwinkeln des elektrischen Versorgungsnetzes die geringste Differenz aufweist.

Diese Beschreibung bzw. Definition ist so zu verstehen, dass ein elektrisches Versorgungsnetz sehr viele Netzknoten aufweist, die alle unterschiedliche Phasenwinkel aufweisen können. Dabei ist ein Phasenwinkel der Netzspannung gemeint, der bezogen auf einen Referenzwinkel angenommen wird. Der Referenzwinkel kann umlaufen, die jeweiligen Phasenwinkel der einzelnen Netzknoten auch, es ergibt sich aber jeweils als Differenz zwischen den Phasenwinkeln ein fester Wert, da die Netzfrequenz gleich ist. Zumindest gilt das für einen stationären Fall.

Von dem Netzschwerpunkt aus sind - vereinfacht ausgedrückt - die Phasenwinkel von Netzknoten in einer Richtung größer als am Netzschwerpunkt, werden insbesondere mit zunehmendem Abstand größer, wohingegen Phasenwinkel in eine andere Richtung kleiner werden. Dadurch ergibt sich wenigstens ein Netzknoten mit einem maximalen Phasenwinkel und ein anderer mit einem minimalen. Diese beiden Knoten haben die größte Phasenwinkeldifferenz. Der Netzschwerpunkt ist dann derjenige, an dem der Phasenwinkel genau in der Mitte zwischen den genannten größten und genannten kleinsten liegt. Alle anderen Netzknoten, die nicht denselben Phasenwinkel wie der Netzschwerpunkt aufweisen, weisen somit entweder zu dem maximalen Phasenwinkel oder zu dem minimalen Phasenwinkel eine größere Differenz auf. Es kommt auch in Betracht, dass der Netzschwerpunkt als Linie, auch als Ring möglich, ausgebildet ist. Alle Netzknoten auf dieser Linie haben dann denselben Phasenwinkel. An der Beurteilung, wie nah ein Knoten an dem Netzschwerpunkt liegt, ändert das nichts, denn es kommt dabei auf die Differenz der Phasenwinkel zwischen Netzschwerpunkt und dem Referenzpunkt an.

Möglichst nah an dem Netzschwerpunkt bedeutet, dass die Differenz der Phasenwinkel zwischen Netzschwerpunkt und dem Referenzpunkt möglichst gering ist. Dadurch kann dann erreicht werden, dass das Einspeiseverfahren möglichst stabil gesteuert werden kann. Je näher nämlich der Referenzpunkt an dem Netzschwerpunkt liegt, umso stabiler ist er und umso besser eignet er sich dadurch als Referenzwert.

Vorzugsweise werden nämlich die Einspeisesysteme und/oder die Einspeiseanlagen so gesteuert, dass die auf den Referenzpunkt referenzieren, also auf die an dem referenzpunkt nach Betrag und Phase erfasste bzw. berechnete Spannung.

Es wurde aber auch erkannt, dass der Idealfall, nämlich, dass der Referenzpunkt dem Netzschwerpunkt entspricht, nicht unbedingt realisiert werden kann. Somit wird versucht, den Referenzpunkt so nah an den Netzschwerpunkt wie möglich heranzubringen, aber eben nur so nah, dass die Spannung und Phasenwinkel berechnet werden kann. Das ist besonders nicht mehr möglich, wenn zu- oder abfließende Ströme nicht mehr ausreichend erfasst werden können. Das ist zum Beispiel dann der Fall, wenn ein großer Einspeiser einspeist oder ein großer Verbraucher verbraucht und dessen Werte nicht oder nicht mit vertretbarem Aufwand erfassbar sind.

Erfindungsgemäß wird auch eine Einspeiseanordnung vorgeschlagen. Diese umfasst mehrere Einspeisesysteme zum Einspeisen elektrischer Leistung in ein elektrisches Versorgungsnetz, wobei
- ein Einspeisesystem als einzelne Einspeiseanlage, insbesondere als Windenergieanlage, oder als Einspeisepark mit mehreren Einspeiseanlagen, insbesondere als Windpark mit mehreren Windenergieanlagen ausgebildet ist,
- jedes Einspeisesystem dazu vorbereitet ist, jeweils über einen Anschlussknoten in das elektrische Versorgungsnetz einen Systemeinspeisestrom einzuspeisen,
- jede Einspeiseanlage dazu vorbereitet ist, einen Anlagenstrom abzugeben,
- ein Systemeinspeisestrom einem Anlagenstrom entspricht, oder aus mehreren Anlagenströmen zusammengesetzt ist, je nachdem, wie viele Einspeiseanlagen das jeweilige Einspeisesystem aufweist,
- zwischen jedem der Einspeisesysteme und einem Referenzpunkt im elektrischen Versorgungsnetz jeweils ein Systemübertragungspfad zum Übertragen elektrischer Leistung vorhanden ist, sodass bei durchgeführter Einspeisung auf jedem Systemübertragungspfad der jeweilige Systemeinspeisestrom übertragen wird,
- zwischen jeder der Einspeiseanlagen und dem Referenzpunkt im elektrischen Versorgungsnetz jeweils ein Anlagenübertragungspfad zum Übertragen elektrischer Leistung vorhanden ist, sodass bei durchgeführter Einspeisung auf jedem Anlagenübertragungspfad der Anlagenstrom übertragen wird,
- die Systemübertragungspfade zwischen einem Verbindungsknoten und dem Referenzpunkt einen gemeinsamen Pfadabschnitt aufweisen, auf dem sich die Systemeinspeiseströme zu einem Gesamteinspeisestrom addieren,
- jedes Einspeisesystem dazu vorbereitet ist, seinen Systemeinspeisestrom in Abhängigkeit von einer Phasenwinkelverschiebung und/oder einem Spannungsabfall zwischen dem Einspeisesystem und dem Referenzpunkt zu steuern, und/oder
- jede Einspeiseanlage dazu vorbereitet ist, ihren Anlagenstrom in Abhängigkeit von einer Phasenwinkelverschiebung und/oder einem Spannungsabfall zwischen der Einspeiseanlage und dem Referenzpunkt zu steuern, wobei
- die Einspeiseanordnung dazu vorbereitet ist, dass die Phasenverschiebung bzw. der Spannungsabfall jeweils in Abhängigkeit von dem Gesamteinspeisestrom ermittelt wird.

Jedes Einspeisesystem ist insbesondere dadurch dazu vorbereitet, jeweils über einen Anschlussknoten in das elektrische Versorgungsnetz einen Systemeinspeisestrom einzuspeisen, dass es an den jeweiligen Anschlussknoten angeschlossen ist. Außerdem kann das Einspeisesystem zum Einspeisen entsprechende Umrichter oder Wechselrichter aufweisen. Es kommt auch in Betracht, dass ein Einspeisesystem mittels der einen oder mehreren Einspeiseanlagen einspeisen kann.

Die Einspeiseanlagen sind dadurch dazu vorbereitet, einen Anlagenstrom abzugeben, dass sie entsprechende Wechselrichter oder Umrichter aufweisen, die einen solchen Anlagenstrom erzeugen. Insoweit kann der Anlagenstrom auch als Ausgangsstrom der Einspeiseanlagen angesehen werden. Sind mehrere Einspeiseanlagen in einem Einspeisesystem vorhanden, so können sich innerhalb des Einspeisesystems die Anlagenströme an entsprechenden Knoten im Einspeisesystem zu dem Systemeinspeisestrom überlagern, nämlich aufaddieren.

Ein Systemübertragungspfad und auch ein Anlagenübertragungspfad müssen nicht Teil des Einspeisesystems sein, können aber Teil des Einspeisesystems sein, zumindest teilweise. In jedem Fall hängt aber das Steuern jeweils eines Systemeinspeisestroms und/oder eines Anlagenstroms von diesen Systemübertragungspfaden oder Anlagenübertragungspfaden bzw. den dort jeweils übertragenen Strömen ab. Somit werden diese Pfade, zumindest die dort fließenden Ströme, berücksichtigt.

Dass hier das Einspeisesystem dazu vorbereitet ist, seinen Systemeinspeisestrom in Abhängigkeit von einer Phasenwinkelverschiebung und/oder einem Spannungsabfall zwischen dem Einspeisesystem und dem Referenzpunkt zu steuern, beinhaltet insbesondere, entsprechende Werte der Phasenwinkelverschiebung oder des Spannungsabfalls aufzunehmen. Es beinhaltet auch, dass die entsprechende Steuerung dazu vorbereitet ist, entsprechende Informationen zu verarbeiten. Besonders kann ein entsprechendes Steuerprogramm implementiert sein.

Gleiches gilt für jede Einspeiseanlage, die dazu vorbereitet ist, ihren Anlagenstrom in Abhängigkeit von einer Phasenwinkelverschiebung und/oder einem Spannungsabfall zwischen der Einspeiseanlage und dem Referenzpunkt zu steuern. Dazu kann eine entsprechende Steuerung vorgesehen sein, die implementiert sein kann und entsprechende Eingangswerte aufnimmt und den Anlagenstrom entsprechend davon abhängig steuert.

Dass die Einspeiseanordnung dazu vorbereitet ist, dass die Phasenwinkelverschiebung bzw. der Spannungsabfall jeweils in Abhängigkeit von dem Gesamteinspeisestrom ermittelt wird, kann durch ein entsprechend implementiertes Steuerverfahren erreicht werden. Das Steuerverfahren weist diese Funktionalität auf. Das kann besonders beinhalten, einen entsprechenden Gesamteinspeisestrom zu erfassen, z. B. durch entsprechende Messungen oder entsprechend erhaltene Messsignale, oder es kann aus anderen Werten ermittelt werden. Solche anderen Werte können Werte der einzelnen Systemeinspeiseströme und/oder der einzelnen Anlagenströme sein. Grundsächlich kommt auch eine andere Ermittlung in Betracht, beispielsweise durch entsprechende Messung von Spannungen an unterschiedlichen Punkten.

Es ist insbesondere vorgesehen, dass jedes Einspeisesystem bzw. jede Einspeiseanlage wie beschrieben arbeitet, um das Potential der Erfindung möglichst vollständig auszuschöpfen, aber wenn sich nicht alle diese Einspeisesysteme bzw. Einspeiseanlagen beteiligen, kann durch die übrigen, die das Verfahren umsetzen, dennoch ein vorteilhafter Effekt erzielt werden. Möglichst sollten dabei auch die Ströme der Einspeisesysteme bzw. Einspeiseanlagen, die sich nicht beteiligen berücksichtigt werden.

Erfindungsgemäß werden daher auch Einspeisesysteme und/oder Einspeiseanlagen vorgeschlagen, die sich jeweils beteiligen und daher die Schritte ausführen, die sich beteiligende Einspeisesysteme bzw. Einspeiseanlagen ausführen.

Gemäß einem Aspekt wird vorgeschlagen, dass eine Einspeisesteuerungseinrichtung für die Einspeiseanordnung vorgesehen ist. Mittels dieser Einspeisesteuerungseinrichtung wird das Einspeisen gesteuert, wenn die Einspeiseanordnung entsprechend in Betrieb ist. Die Einspeisesteuerungseinrichtung kann dazu eine zentrale Steuereinheit umfassen und außerdem oder alternativ kann sie durch mehrere zur Kommunikation miteinander vorbereitete lokale Steuereinheiten der Einspeisesysteme und/oder der Einspeiseanlagen realisiert sein. In einem Fall wird sie durch die zentrale Steuereinheit realisiert, die das vorgeschlagene Einspeisen koordiniert und dazu mit den Einspeisesystemen und/oder Einspeiseanlagen kommuniziert. Dafür können Sollwerte von der zentralen Steuereinheit abgegeben werden und vorzugsweise auch Messwerte entgegengenommen werden. Die Messwerte können von externen oder zusätzlichen Erfassungseinrichtungen kommen. Messwerte können aber auch von den Einspeisesystemen und/oder den Einspeiseanlagen stammen. Besonders wenn diese ohnehin Werte wie den jeweils erzeugten Anlagestrom oder Systemeinspeisestrom erfassen, können diese Werte an die zentrale Steuereinheit übertragen werden.

Stattdessen kann die Einspeisesteuerungseinrichtung dezentral strukturiert sein, indem jedes Einspeisesystem und/oder jede Einspeiseanlage für sich den jeweiligen Systemeinspeisestrom bzw. Anlagenstrom steuert, dabei aber die übrigen Systemeinspeiseströme und/oder Anlagenströme berücksichtigt, sei es direkt oder indirekt.

Es kommt auch eine Kombination in Betracht, bei der die zentrale Steuereinheit vorgesehen ist und einige Sollwerte vorgibt, z. B. prozentual einen Systemeinspeisestrom bzw. Anlagenstrom. An diesem können sich die Einspeisesysteme bzw. Einspeiseanlagen orientieren, bei schnellen Spannungsänderungen aber selbsttätig reagieren. Mit anderen Worten kann die zentrale Steuereinheit Sollwerte für einen stationären Betrieb vorgeben, wobei die einzelnen Einspeisesysteme bzw. Einspeiseanlagen von diesem in einem transienten Vorgang abweichen können und sich dabei eigenständig an der betreffenden Phasenverschiebung und/oder dem betreffenden Spannungsabfall orientieren.

Außerdem ist vorgesehen, dass die Einspeisesteuerungseinrichtung dazu vorbereitet ist, ein Verfahren gemäß einer der vorstehend beschriebenen Ausführungsformen des Verfahrens zum Einspeisen durchzuführen. Auch dazu kann eine entsprechende Steuerung in der Einspeisesteuerungseinrichtung implementiert sein.

Erfindungsgemäß wird auch ein Einspeisesystem, insbesondere Windpark, vorgeschlagen, das vorbereitet ist zum Ausführen eines Verfahrens nach einer der vorstehenden Ausführungsformen und/oder das vorbereitet ist zur Verwendung als Einspeisesystem einer Einspeiseanordnung einer der vorstehenden Ausführungsformen. Das Einspeisesystem verwendet bzw. beinhaltet somit die dazu jeweils zu dem Einspeisesystem beschriebenen Merkmale.

Erfindungsgemäß wird auch eine Einspeiseanlage, insbesondere Windenergieanlage vorgeschlagen, die vorbereitet ist zum Ausführen eines Verfahrens nach einer der vorstehenden Ausführungsformen, und/oder das vorbereitet ist zur Verwendung als Einspeiseanlage einer Einspeiseanordnung einer der vorstehenden Ausführungsformen. Die Einspeiseanlage verwendet bzw. beinhaltet somit die dazu jeweils zur Einspeiseanlage beschriebenen Merkmale.

Die Erfindung wird nun nachfolgend anhand von Ausführungsformen unter Bezugnahme auf die begleitenden Figuren beispielhaft näher erläutert.
- Figur 1: zeigt eine Windenergieanlage in einer perspektivischen Darstellung.
- Figur 2: zeigt einen Windpark in einer schematischen Darstellung.
- Figur 3A: zeigt eine Einspeiseanordnung
- Figur 3B: zeigt ein zu Figur 3A zugehöriges Spannungszeigerdiagramm.
- Figur 4: zeigt eine Einspeiseanordnung gemäß Figur 3A mit weiteren Details.

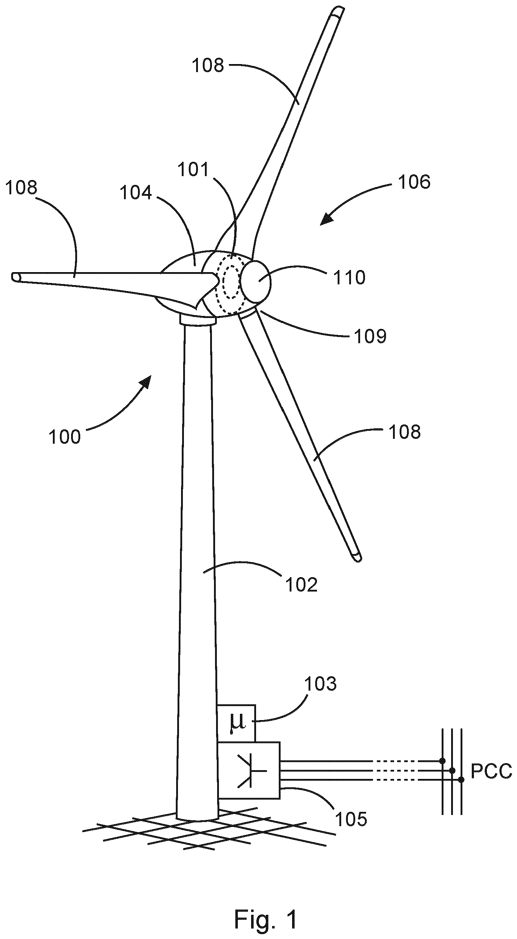

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten. Die Anlagensteuerung 103 kann eine lokale Steuereinheit bilden oder beinhalten.

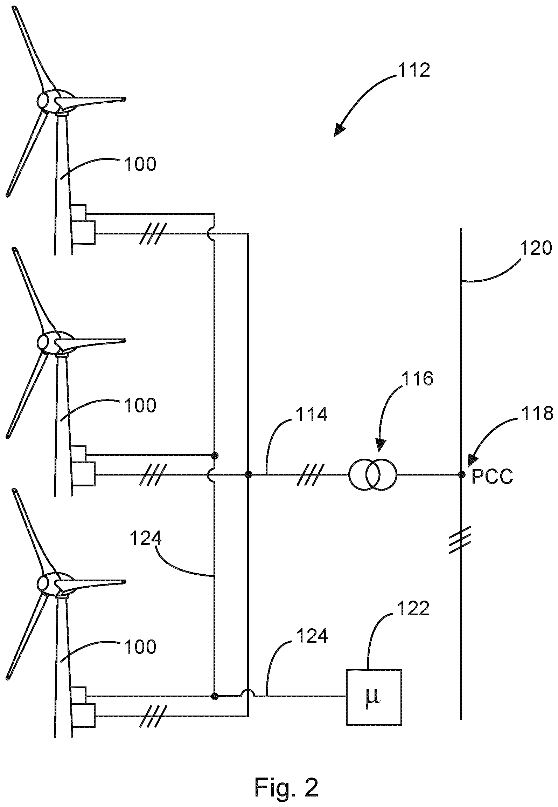

Fig. 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC oder Netzanschlusspunkt bezeichnet wird, in das Versorgungsnetz 120 einzuspeisen. Fig. 2 ist nur eine vereinfachte Darstellung eines Windparks 112. Es kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Der Windpark 112 weist zudem einen zentralen Parkrechner 122 auf, der synonym auch als zentrale Parksteuerung bezeichnet werden kann. Dieser kann über Datenleitungen 124, oder kabellos, mit den Windenergieanlagen 100 verbunden sein, um darüber mit den Windenergieanlagen Daten auszutauschen und insbesondere Messwerte von den Windenergieanlagen 100 zu erhalten und Steuerwerte an die Windenergieanlagen 100 zu übertragen. Der zentrale Parkrechner 122 bzw. die zentrale Parksteuerung kann eine lokale Steuereinheit des Windparks bilden oder beinhalten, eine Einspeisesteuerungseinrichtung für eine Einspeiseanordnung bilden, oder Teil einer Einspeisesteuerungseinrichtung sein.

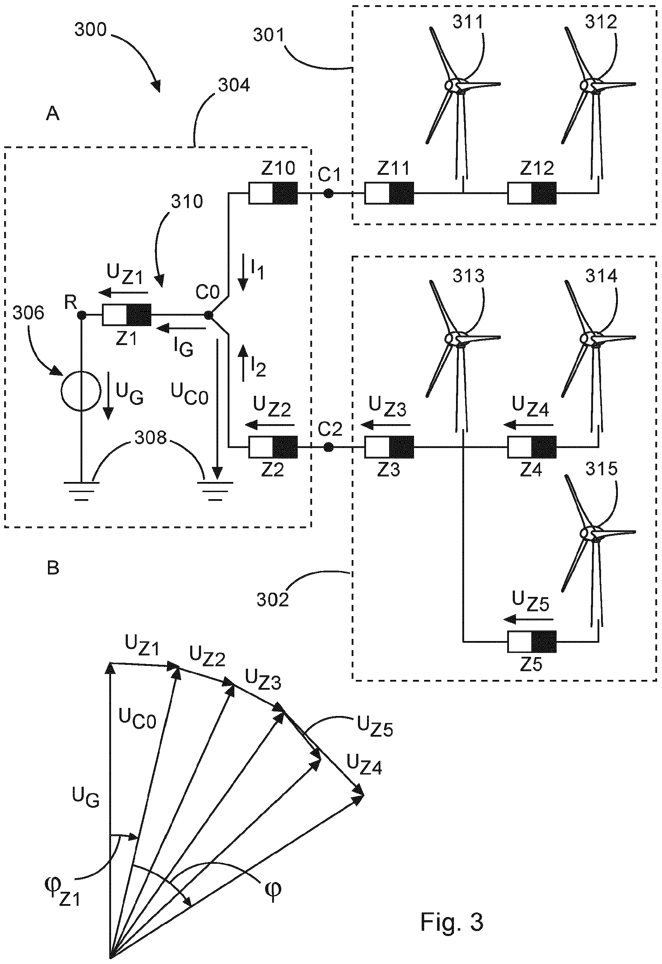

Fig. 3A zeigt eine Einspeiseanordnung 300 mit einem ersten Einspeisesystem 301 und einem zweiten Einspeisesystem 302. Beide Einspeisesysteme 301 und 302 sind als Windparks ausgebildet mit exemplarisch insgesamt fünf Windenergieanlagen 311 bis 315. Beide Windparks 301 und 302 speisen jeweils über einen Anschlussknoten C1 bzw. C2 in ein elektrisches Versorgungsnetz 304 ein. Die Anschlussknoten C1 und C2 können somit jeweils als Netzanschlusspunkt verstanden werden. Sie können als Teil des jeweiligen Einspeisesystems 301 bzw. 302 betrachtet werden, oder als Teil des elektrischen Versorgungsnetzes 304. Das elektrische Versorgungsnetz wird hier der Einfachheit halber im Wesentlichen durch die Spannungsquelle 306 repräsentiert. Die Spannungsquelle 306 weist eine Netzspannung U_{G} auf, die somit zwischen dem Referenzpunkt R und der elektrischen Erde 308 anliegt. Sie ist veränderlich und das kann auch von einem Verhalten des elektrischen Versorgungsnetzes 304 abhängen, das durch diese Spannungsquelle zumindest teilweise hier repräsentiert wird.

Außerdem ist ein Verbindungsknoten C0 vorgesehen, an dem sich Systemeinspeiseströme I₁ und I₂ des ersten und zweiten Einspeisesystems 301 und 302 überlagern, nämlich addieren. Zwischen dem Verbindungsknoten C0 und dem Referenzpunkt R ist ein gemeinsamer Pfadabschnitt 310 vorhanden und wird durch die Netzimpedanz Z1 elektrisch gekennzeichnet. Zwischen dem Verbindungsknoten C0 und der elektrischen Erde 308 liegt eine Verbindungsknotenspannung Uco an.

Über den gemeinsamen Pfadabschnitt 310 und damit über die Netzimpedanz Z1 fließt ein gemeinsamer Gesamteinspeisestrom I_{G}, der sich aus den exemplarischen Systemeinspeiseströmen I₁ und I₂ zusammensetzt. Die Spannung U_{Z1} an der Netzimpedanz Z1 lässt sich somit bestimmen.

Das erste Einspeisesystem 301 speist somit an dem Anschlussknoten C1 über die Impedanz Z10 und die Impedanz Z1 bis zum Referenzpunkt R ein. Diese Strecke von dem Anschlussknoten C1 bis zum Referenzpunkt R ist der Systemübertragungspfad des ersten Einspeisesystems und ist durch die Impedanzen Z10 und Z1 gekennzeichnet. Entsprechend speist das zweite Einspeisesystem 302 an dem zweiten Anschlussknoten C2 in das elektrische Versorgungsnetz ein und die Strecke von dem zweiten Anschlussknoten C2 bis zum Referenzpunkt R ist somit der Systemübertragungspfad des zweiten Einspeisesystems 302. Er ist durch die Impedanzen Z1 und Z2 gekennzeichnet. Der gemeinsame Pfadabschnitt 310 ist somit Teil der Systemübertragungspfade des ersten und zweiten Einspeisesystems.

Die Windenergieanlagen 311 bis 315, die somit jeweils eine Einspeiseanlage ausbilden, stellen jeweils einen Anlagenstrom über einen Anlagenübertragungspfad bereit. Für die Windenergieanlage 311 verläuft der Anlagenübertragungspfad über die Impedanzen Z11, Z10 und Z1, für die Windenergieanlage 312 über die Impedanzen Z12, Z11, Z10 und Z1, für die Windenergieanlage 313 über die Impedanzen Z3, Z2 und Z1, für die Windenergieanlage 314 über die Impedanzen Z4, Z3, Z2 und Z1 und für die Windenergieanlage 315 über die Impedanzen Z5, Z3, Z2 und Z1.

Damit ist der gemeinsame Pfadabschnitt 310 auch für die genannten Anlagenübertragungspfade ein gemeinsamer Pfadabschnitt.

Wünschenswert ist, dass sich die Einspeisung der Einspeisesysteme 301 und 302 an der Netzspannung U_{G} orientiert. Wenn das zweite Einspeisesystem 302 über die Impedanz Z2 einspeist und diese Impedanz bekannt ist, kann die Verbindungsknotenspannung Uco erfasst werden, nämlich aus der Spannung an dem zweiten Anschlussknoten C2, dem zweiten Systemeinspeisestrom I₂ und der Kenntnis der Impedanz Z2. Um aber die Spannung an dem Referenzpunkt R zu ermitteln, muss zusätzlich die Spannung U_{Z1} bekannt sein. Bei bekannter Netzimpedanz Z1 und dem Strom über diese Netzimpedanz Z1 könnte die Spannung U_{Z1} ermittelt werden. Der Strom über die Netzimpedanz Z1, nämlich der Gesamteinspeisestrom, setzt sich aber aus den beiden Systemeinspeiseströmen I₁ und I₂ zusammen.

Daher wird vorgeschlagen, dass das zweite Einspeisesystem 302 den ersten Einspeisestrom des ersten Einspeisesystems 301 ebenfalls berücksichtigt, oder zumindest seine Auswirkungen an der Netzimpedanz Z1 berücksichtigt. Dadurch wird es dann möglich, dass das zweite Einspeisesystem, das hier beispielhaft betrachtet wird, die Netzspannung U_{G} an dem Referenzpunkt genau erfassen kann. Das Einspeisen kann sich dann an dieser Netzspannung U_{G} orientieren. Diese Netzspannung U_{G} eignet sich besser als Referenzspannung als die Verbindungsknotenspannung Uco. Besonders wurde erkannt, dass der Referenzpunkt R so weit im elektrischen Versorgungsnetz wie möglich, also so nah an einem Netzschwerpunkt wie möglich gesetzt werden sollte. Er wird also so nah an dem Netzschwerpunkt gewählt wie noch ausreichend Informationen über die Ströme einer entsprechenden Impedanz besonders vom Verbindungsknoten C0 bis zum Referenzpunkt R bekannt sind oder erfasst werden können.

Häufig kann eine Einspeisung in einem Einspeisesystem, insbesondere einem Windpark, durch die einzelnen Einspeiseanlagen, also durch die einzelnen Windenergieanlagen, durchgeführt werden. Die einzelnen Impedanzen in dem Windpark, hier nämlich in dem zweiten Einspeisesystem die Impedanzen Z3, Z4 und Z5, sind üblicherweise bekannt. Außerdem sind die jeweiligen Anlagenströme der Windenergieanlagen 313 bis 315 bekannt und damit können die jeweiligen Spannungen an den Impedanzen Z3 bis Z5 ermittelt werden. Bei zusätzlicher Kenntnis der Impedanz Z2 zwischen dem Anschlussknoten C2 und dem Verbindungsknoten C0 kann somit jede der Windenergieanlagen 313 bis 315 die Verbindungsknotenspannung U_{C0} an dem Verbindungsknoten C0 ermitteln. Diese könnte als Referenzspannung, auf die die Einspeisung ausgerichtet wird, an der sich die Einspeisung also orientiert, verwendet werden. Besser wäre es aber, die Netzspannung U_{G} an dem Referenzpunkt R zu verwenden. Dazu ist aber zusätzliche Information nötig, nämlich insbesondere der erste Systemeinspeisestrom I1 des ersten Einspeisesystems 301. Genau das zu berücksichtigen wird vorgeschlagen.

Die Spannungsverhältnisse sind dabei in dem Spannungszeigerdiagramm der Figur 3B veranschaulicht. In dem Spannungszeigerdiagramm sind die Netzspannung U_{G} und die Verbindungsknotenspannung U_{C0} eingezeichnet. Sie unterscheiden sich durch die Spannung U_{Z1} über die Netzimpedanz Z1. Insbesondere ergibt sich eine Phasenwinkelverschiebung an der Netzimpedanz Z1, die nämlich einen vergleichsweise geringen ohmschen Anteil aufweist. Je nach Leitungsausführung kann die Netzimpedanz Z1 insbesondere einen hohen induktiven Anteil aufweisen. Gleiches gilt auch für die übrigen Impedanzen Z3 bis Z5 und im Übrigen auch für Z10 bis Z12, die in dem Diagramm aber nicht berücksichtigt sind. Die Phasenverschiebung, verursacht durch die Netzimpedanz Z1, ist in dem Diagramm als ϕ_{Z1} gezeigt. Symbolisch ist ein weiterer Phasenwinkel ϕ eingezeichnet, der die gesamte Phasenverschiebung über die Impedanzen Z2, Z3 und Z4 wiedergibt. Zu jeder Impedanz ergibt sich eine Phasenverschiebung, es sind aber aus Gründen der Übersichtlichkeit diese weiteren Phasenverschiebungen nicht extra eingezeichnet.

Jedenfalls ist zu erkennen, dass eine Referenzierung auf den Verbindungsknoten C0 wesentlich verbessert werden kann durch eine Referenzierung auf den Referenzpunkt R. Dadurch kann nämlich der eingezeichnete Phasenwinkel ϕ_{Z1} zusätzlich berücksichtigt werden.

Es ergibt sich somit eine verbesserte Möglichkeit, das Einspeisen an der Netzspannung U_{G} an dem Referenzpunkt R auszurichten.

Die vorgestellte Lösung ist besonders wichtig für einen Betrieb an extrem weichen Verknüpfungspunkten, der nämlich durch eine stabile Kenntnis der Referenz, also der Netzspannung U_{G} an dem Referenzpunkt R, verbessert werden kann. Damit ist ein Betrieb von Einspeisesystemen, insbesondere Windparks, an extrem schwachen Netzverknüpfungspunkten möglich. Solche Netzverknüpfungspunkte können dann ein Kurzschlussstromverhältnis < 2 aufweisen. Bezogen auf Fig. 3A kann somit an dem Anschlussknoten C2 als auch dem Anschlussknoten C1 jeweils ein Kurzschlussstromverhältnis < 2 vorhanden sein.

Auch für den Verbindungsknoten C0 ist ein solches geringes Kurzschlussstromverhältnis < 2 möglich und wird vorgeschlagen. Ein Kurzschlussstromverhältnis an dem Verbindungsknoten C0 ist eines, bei dem die Nennleistung beider Einspeisesysteme 301 und 302 zusammen zugrunde gelegt wird. Das Kurzschlussstromverhältnis des Verbindungsknotens C0 ist somit das Verhältnis der Leistung, die bei einem Kurzschluss an dem Verbindungsknoten C0 bereitgestellt werden kann, im Verhältnis zu der Summe der Nennleistungen der beiden Einspeisesysteme 301 und 302. Diese Kurzschlussleistung ist somit diejenige Leistung, die sich aus der Netzspannung U_{G}, wenn diese Nennspannung aufweist, und der eingezeichneten Netzimpedanz Z1 ergibt.

Besonders wurde erkannt, dass aus Sicht einer einzelnen Windenergieanlage oder auch eines Windparks, hier nämlich einer der Windenergieanlagen 311 bis 315 bzw. eines der Windparks 301 und 302, die Phasenverschiebung durch den eigenen Strom bis zu einem bestimmten Ort im Netz bestimmbar ist. Dieser bestimmte Ort ist der Verbindungsknoten C0. Dabei wurde erkannt, dass dies so weit in ein Netz hinein möglich ist, nämlich in Richtung des Netzschwerpunkts, solange die Knotenströme bekannt sind. Das wird hier an den beiden Systemeinspeiseströmen I₁ und I₂ veranschaulicht, die somit für den Verbindungsknoten C0 die Knotenströme bilden.

In dem Beispiel der Fig. 3A kann somit das zweite Einspeisesystem 302, also der zweite Windpark 302, die Verbindungsknotenspannung U_{C0} am Verbindungsknoten C0 bestimmen, wenn alle Ströme der einzelnen Windenergieanlagen 313 bis 315 und die Impedanzen Z3 bis Z5 bekannt sind. Somit können auch einzelne Windenergieanlagen jeweils bis zum nächsten Knoten, an dem eine zusätzliche Einspeisung oder Last wirkt, die Spannung bzw. Phasenverschiebung bestimmen, wenn die Netzimpedanz bekannt ist. Die Spannung bzw. Phasenverschiebung kann also bis zu einem solchen Knoten hin bestimmt werden, bis eine zusätzliche Einspeisung oder Last auftritt, die nicht mehr bekannt ist.

Es wurde somit erkannt, dass bei der Bestimmung der Referenzspannung, nämlich besonders die Spannung am Referenzpunkt, die eigene Phasenverschiebung herausgerechnet werden kann, sodass der Strom basierend auf der Phasenlage und Frequenz einer weiter entfernten Spannung eingespeist wird. Das kann für die Stromzeigergenerierung der einzelnen Windenergieanlage erfolgen und sogar für einen ganzen Windpark. Die Fig. 3A soll dabei beide Varianten veranschaulichen.

Im Falle einer Regelung auf Windparkebene wird vorgeschlagen, aus den Impedanzen und den Knotenströmen eine zentrale Spannungsreferenz zu erstellen, welche den einzelnen Windenergieanlagen mitgeteilt wird. Über den Phasenversatz zur eigenen gemessenen Spannung und der eingespeisten Leistung kann zudem auf die aktuelle Phasenwinkelsensitivität geschlossen werden und die Regelung entsprechend angepasst werden. Es ist also nicht nur die Spannungsreferenz ermittelbar, auf die sich die Einspeisung einstellen kann, sondern es kann auch auf die aktuelle Phasenwinkelsensitivität geschlossen werden.

Im Grunde kann die Phasenwinkelsensitivität dabei ein Maß bilden, wie empfindlich die Referenzspannung auf Änderungen der eingespeisten Leistung reagiert. Das kann bei der Regelung berücksichtigt werden. Insbesondere kann die Regelung entsprechend in ihrer Verstärkung angepasst werden. Besonders kann bei einer erkannten großen Phasenwinkelsensitivität die Regelung entsprechend schwächer eingestellt werden, um bei Spannungsänderungen, insbesondere Änderungen der Winkelverschiebung bzw. des Phasenwinkels, eine Überreaktion zu vermeiden.

Vorzugsweise wird das zentrale Generieren einer Stromreferenz in Abhängigkeit von der gewünschten Leistung vorgeschlagen. Dafür wird besonders vorgeschlagen, eine schnelle Kommunikation zwischen einer zentralen Steuereinheit und den einzelnen Windenergieanlagen vorzusehen. Dann können die Sollströme der einzelnen Windenergieanlagen zentral vorgegeben werden. Somit kann eine zentrale Stromzeigergenerierung vorgesehen sein.

Außerdem oder alternativ wird vorgeschlagen, alle Knotenströme an jede der anderen Windenergieanlagen zu übermitteln. Die Knotenströme sind somit die Ströme, die die Windenergieanlagen erzeugen und die sich zu relevanten Strömen addieren. Besonders die Anlagenströme können jeweils als Knotenströme betrachtet werden. Werte dieser Knotenströme bzw. Anlagenströme können innerhalb des jeweiligen Windparks, aber auch übergreifend zwischen den Windparks, also zwischen den Einspeisesystemen 301 und 302, übertragen werden. Vorzugsweise werden Werte der Anlagenströme jeweils innerhalb des Windparks zwischen den Windenergieanlagen ausgetauscht, und zusätzlich zwischen den Windparks Werte der jeweiligen Summenströme, also jeweils der Systemeinspeiseströme, ausgetauscht.

Dann kann jede Windenergieanlage selber den aktuellen Arbeitspunkt des Windparknetzes und der anderen Windenergieanlagen bestimmen und auch die eigene Regelung darauf anpassen. Bei dieser Variante kann auf eine sehr schnelle Kommunikation verzichtet werden, weil die Stromreferenz auf jeder Windenergieanlage einzeln generiert wird und nur die langsamer zu übertragenden Arbeitspunkte der anderen Windenergieanlagen berücksichtigt werden. Jede Windenergieanlage erzeugt also ihren eigenen Stromzeiger zum Einspeisen, wobei sie von den übrigen Windenergieanlagen aber nur die Effektivwerte der jeweiligen Anlagenströme berücksichtigt, um es vereinfacht auszudrücken.

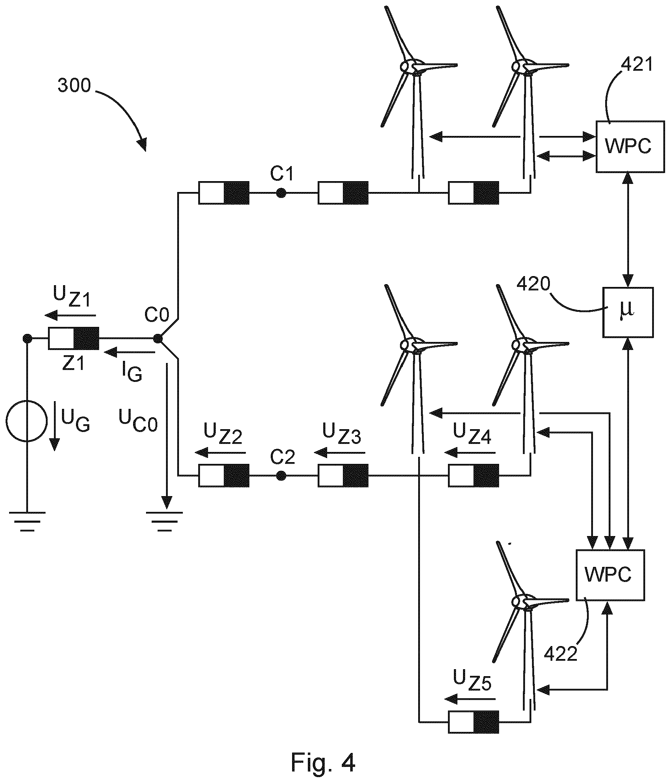

Die Einspeiseanordnung 300 der Fig. 3A ist in Fig. 4 im Grunde nochmals identisch dargestellt, wobei zusätzlich Kommunikationselemente und Steuerelemente eingezeichnet sind. Besonders wird eine zentrale Steuereinheit 420 vorgeschlagen. Die zentrale Steuereinheit 420 kann jeweils mit einer zentralen Parksteuerung 421 und 422 bidirektional kommunizieren. Jede zentrale Parksteuerung kann dann wiederum mit den einzelnen Windenergieanlagen des Windparks kommunizieren. Auch das ist bidirektional vorgesehen. Dadurch können die einzelnen Windenergieanlagen Messwerte, insbesondere über ihre abgegebenen Anlagenströme, an die jeweilige zentrale Parksteuerung 421 oder 422 übermitteln und diese Werte können an die zentrale Steuereinheit 420 übergeben werden. Die zentrale Steuereinheit 420 kann wiederum all diese Werte zentral sammeln und die jeweils benötigten Werte an die zentralen Parksteuerungen 421 und 422 übergeben, von denen sie an die einzelnen Windenergieanlagen 311 bis 315 verteilt werden.

Das ist eine mögliche Topologie einer Einspeisesteuerungseinrichtung. Hier bilden die zentrale Steuereinheit 420 zusammen mit den zentralen Parksteuerungen 421 und 422 die Einspeisesteuerungseinrichtung. Es kommen aber auch andere Topologien in Betracht, z. B. dass die zentrale Steuereinheit unmittelbar mit jeder Windenergieanlage kommuniziert. Es kommt auch in Betracht, dass alle Windenergieanlagen untereinander über ein entsprechendes Datensystem verbunden sind.

## Patentansprüche

1. Verfahren zum Einspeisen elektrischer Leistung in ein elektrisches Versorgungsnetz mittels mehrerer Einspeisesysteme (301, 302), wobei
- ein Einspeisesystem als einzelne Einspeiseanlage, insbesondere als Windenergieanlage (311-315), oder als Einspeisepark mit mehreren Einspeiseanlagen, insbesondere als Windpark (301, 302) mit mehreren Windenergieanlagen ausgebildet ist,
- jedes Einspeisesystem jeweils über einen Anschlussknoten (C1, C2) in das elektrische Versorgungsnetz einen Systemeinspeisestrom (I₁, I₂) einspeist,
- jede Einspeiseanlage einen Anlagenstrom abgibt,
- ein Systemeinspeisestrom einem Anlagenstrom entspricht, oder aus mehreren Anlagenströmen zusammengesetzt ist, je nachdem, wie viele Einspeiseanlagen das jeweilige Einspeisesystem aufweist,
- zwischen jedem der Einspeisesysteme und einem Referenzpunkt im elektrischen Versorgungsnetz jeweils ein Systemübertragungspfad zum Übertragen elektrischer Leistung vorhanden ist, sodass auf jedem Systemübertragungspfad der jeweilige Systemeinspeisestrom übertragen wird,
- zwischen jeder der Einspeiseanlagen (301, 302) und dem Referenzpunkt (R) im elektrischen Versorgungsnetz (304) jeweils ein Anlagenübertragungspfad zum Übertragen elektrischer Leistung vorhanden ist, sodass auf jedem Anlagenübertragungspfad der Anlagenstrom übertragen wird,
- die Systemübertragungspfade zwischen einem Verbindungsknoten (C0) und dem Referenzpunkt einen gemeinsamen Pfadabschnitt (310) aufweisen, auf dem sich die Systemeinspeiseströme (I₁, I₂) zu einem Gesamteinspeisestrom (I_{G}) addieren,
- wenigstens eines oder jedes Einspeisesystem (301, 302) seinen Systemeinspeisestrom (I₁, I₂) in Abhängigkeit von einer Phasenwinkelverschiebung und/oder einem Spannungsabfall zwischen dem Einspeisesystem und dem Referenzpunkt (R) steuert, und/oder
- wenigstens eine oder jede Einspeiseanlage (311-315) ihren Anlagenstrom in Abhängigkeit von einer Phasenwinkelverschiebung und/oder einem Spannungsabfall zwischen der Einspeiseanlage und dem Referenzpunkt (R) steuert,
wobei
- die Phasenverschiebung bzw. der Spannungsabfall jeweils in Abhängigkeit von dem Gesamteinspeisestrom ermittelt wird.

2. Verfahren nach Anspruch 1, **dadurch gekennzeichnet, dass**
jeder Anschlussknoten als Netzanschlusspunkt ausgebildet ist, und/oder
die Einspeisesysteme und die Einspeiseanlagen, zumindest ein Teil davon, umrichtergesteuert sind und/oder stromprägend arbeiten.

3. Verfahren nach Anspruch 1 oder 2, **dadurch gekennzeichnet, dass** - wenigstens eines der Einspeisesysteme seinen Systemeinspeisestrom in Abhängigkeit von der Phasenwinkelverschiebung und/oder in Abhängigkeit von dem Spannungsabfall zwischen dem Einspeisesystem und dem Referenzpunkt dadurch steuert, dass
- die bzw. jede Einspeiseanlage des Einspeisesystems ihren Anlagenstrom in Abhängigkeit von
- einer Phasenwinkelverschiebung und/oder
- einem Spannungsabfall
zwischen der jeweiligen Einspeiseanlage und dem Referenzpunkt steuert.

4. Verfahren nach einem der vorstehenden Ansprüche, **dadurch gekennzeichnet, dass**
- zur Erfassung der Phasenwinkelverschiebung bzw. des Spannungsabfalls in Abhängigkeit von dem Gesamteinspeisestrom
- Informationen zu den Systemeinspeiseströmen zwischen den Einspeisesystemen ausgetauscht werden und/oder
- Informationen zu den Anlagenströmen zwischen den Einspeiseanlagen ausgetauscht werden und/oder
- der Gesamteinspeisestrom messtechnisch erfasst wird.

5. Verfahren nach einem der vorstehenden Ansprüche, **dadurch gekennzeichnet, dass**
- jeweils für ein Einspeisesystem und/oder für eine Einspeiseanlage eine Phasenwinkelsensitivität bestimmt wird, die ein Verhältnis einer Veränderung des Systemeinspeisestroms bzw. des Anlagenstroms zur resultierenden Phasenwinkelverschiebung angibt, und
- der Systemeinspeisestrom bzw. der Anlagenstrom jeweils in Abhängigkeit von
- der jeweils erfassten Phasenwinkelverschiebung und
- der jeweils bestimmten Phasenwinkelsensitivität gesteuert wird, insbesondere, dass
- der Systemeinspeisestrom bzw. der Anlagenstrom in Abhängigkeit von der Phasenwinkelverschiebung mittels einer Stromregelung mit einer Reglerverstärkung gesteuert wird, und
- die Reglerverstärkung dem Betrage nach mit zunehmender Phasenwinkelsensitivität verringert wird.

6. Verfahren nach einem der vorstehenden Ansprüche, **dadurch gekennzeichnet, dass**
- das Steuern des Systemeinspeisestroms und/oder des Anlagenstroms jeweils so erfolgt, dass die Phasenwinkelverschiebung wenigstens ein Verschiebungsgrenzkriterium einhält, insbesondere
- dass die Phasenwinkelverschiebung dem Betrage nach einen Verschiebungsmaximalwert nicht überschreitet und/oder
- dass die Phasenwinkelverschiebung dem Betrage nach eine maximale Verschiebungsänderungsrate nicht überschreitet.

7. Verfahren nach einem der vorstehenden Ansprüche, **dadurch gekennzeichnet, dass**
- das Steuern der Systemseinspeiseströme und/oder der Anlagenströme zentral koordiniert wird, insbesondere so, dass
- eine Phasenwinkelveränderung am Referenzpunkt wenigstens ein Winkelgrenzkriterium einhält, insbesondere
- dass die Phasenwinkelveränderung dem Betrage nach einen Winkelmaximalwert nicht überschreitet und/oder
- dass die Phasenwinkelveränderung dem Betrage nach eine maximale Winkeländerungsrate nicht überschreitet.

8. Verfahren nach einem der vorstehenden Ansprüche, **dadurch gekennzeichnet, dass**
- zum Steuern der Systemeinspeiseströme und/oder der Anlagenströme eine zentrale Stromreferenzgröße vorgegeben wird, wobei
- jeder Systemeinspeisestrom bzw. jeder Anlagenstrom in Abhängigkeit von dieser Stromreferenzgröße vorgegeben wird, und insbesondere
- die Stromreferenzgröße für alle Systemeinspeiseströme und/oder für alle Anlagenströme einen Stromphasenwinkel vorgibt.

9. Verfahren nach einem der vorstehenden Ansprüche, **dadurch gekennzeichnet, dass**
- alle Systemeinspeiseströme der Einspeisesysteme erfasst und als Information an die jeweils übrigen Einspeisesysteme übertragen werden, und/oder
- einige oder alle Anlagenströme der Einspeiseanlagen erfasst und als Information an einige oder alle Einspeiseanlagen und/oder an die Einspeisesysteme übertragen werden, sodass
- das Steuern der Systemeinspeiseströme und/oder der Anlagenströme jeweils in Abhängigkeit von den übrigen Systemeinspeiseströmen bzw. Anlagenströmen durchgeführt wird.

10. Verfahren nach einem der vorstehenden Ansprüche, **dadurch gekennzeichnet, dass**
- wenigstens eines der Einspeisesysteme, oder alle Einspeisesysteme ein Kurzschlussstromverhältnis kleiner 2 aufweist bzw. aufweisen, und/oder
- alle Einspeisesysteme zusammen in Bezug auf den Verbindungsknoten ein Kurzschlussstromverhältnis kleiner 2 aufweisen.

11. Verfahren nach einem der vorstehenden Ansprüche, **dadurch gekennzeichnet, dass**
- jeweils einer der Systemeinspeiseströme und/oder einer der Anlagenströme
- zusätzlich in Abhängigkeit von
- wenigstens einem weiteren Einspeiser, der einen Einspeisestrom in den gemeinsamen Pfadabschnitt einspeist, und/oder
- wenigstens einem Verbraucher, der einen Verbrauchsstrom aus dem gemeinsamen Pfadabschnitt erhält,
- gesteuert wird, insbesondere so, dass eine Veränderung eines bzw. des Phasenwinkels am Referenzpunkt berücksichtig wird und das Ermitteln der Phasenverschiebung in Abhängigkeit von der Veränderung des Phasenwinkels am Referenzpunkt berücksichtigt wird.

12. Verfahren nach einem der vorstehenden Ansprüche, **dadurch gekennzeichnet, dass**
- als Referenzpunkt (R) ein Netzknoten ausgewählt wird, der
- möglichst nah an einem Netzschwerpunkt ist, wobei der Netzschwerpunkt einen Knoten im elektrischen Versorgungsnetz beschreibt, an dem ein mittlerer Phasenwinkel auftritt, der zu allen Phasenwinkeln des elektrischen Versorgungsnetzes die geringste Differenz aufweist, und
- dessen Spannung und Phasenwinkel in Abhängigkeit von den Einspeiseströmen und/oder Anlagenströmen und optional weiteren bekannten zwischen dem Verbindungsknoten und Referenzknoten zu- oder abfließenden Strömen berechnet werden kann.

13. Einspeiseanordnung (300) umfassend mehrere Einspeisesysteme (301, 302) zum Einspeisen elektrischer Leistung in ein elektrisches Versorgungsnetz (304), wobei
- ein Einspeisesystem als einzelne Einspeiseanlage, insbesondere als Windenergieanlage (311-315), oder als Einspeisepark mit mehreren Einspeiseanlagen, insbesondere als Windpark (301, 302) mit mehreren Windenergieanlagen ausgebildet ist,
- jedes Einspeisesystem dazu vorbereitet ist, jeweils über einen Anschlussknoten (C1, C2) in das elektrische Versorgungsnetz einen Systemeinspeisestrom (I₁, I₂) einzuspeisen,
- jede Einspeiseanlage dazu vorbereitet ist, einen Anlagenstrom abzugeben,
- ein Systemeinspeisestrom einem Anlagenstrom entspricht, oder aus mehreren Anlagenströmen zusammengesetzt ist, je nachdem, wie viele Einspeiseanlagen das jeweilige Einspeisesystem aufweist,
- zwischen jedem der Einspeisesysteme und einem Referenzpunkt im elektrischen Versorgungsnetz jeweils ein Systemübertragungspfad zum Übertragen elektrischer Leistung vorhanden ist, sodass bei durchgeführter Einspeisung auf jedem Systemübertragungspfad der jeweilige Systemeinspeisestrom übertragen wird,
- zwischen jeder der Einspeiseanlagen (301, 302) und dem Referenzpunkt (R) im elektrischen Versorgungsnetz (304) jeweils ein Anlagenübertragungspfad zum Übertragen elektrischer Leistung vorhanden ist, sodass bei durchgeführter Einspeisung auf jedem Anlagenübertragungspfad der Anlagenstrom übertragen wird,
- die Systemübertragungspfade zwischen einem Verbindungsknoten und dem Referenzpunkt einen gemeinsamen Pfadabschnitt (310) aufweisen, auf dem sich die Systemeinspeiseströme (I₁, I₂) zu einem Gesamteinspeisestrom (I_{G}) addieren,
- wenigstens eines oder jedes Einspeisesystem (301, 302) dazu vorbereitet ist, seinen Systemeinspeisestrom (I₁, I₂) in Abhängigkeit von einer Phasenwinkelverschiebung und/oder einem Spannungsabfall zwischen dem Einspeisesystem und dem Referenzpunkt (R) zu steuern, und/oder
- wenigstens eine oder jede Einspeiseanlage (311-315) dazu vorbereitet ist, ihren Anlagenstrom in Abhängigkeit von einer Phasenwinkelverschiebung und/oder einem Spannungsabfall zwischen der Einspeiseanlage und dem Referenzpunkt zu steuern,
wobei
- die Einspeiseanordnung (300) dazu vorbereitet ist, dass die Phasenverschiebung bzw. der Spannungsabfall jeweils in Abhängigkeit von dem Gesamteinspeisestrom ermittelt wird.

14. Einspeiseanordnung (300) nach Anspruch 13, **dadurch gekennzeichnet, dass**
- eine Einspeisesteuerungseinrichtung vorgesehen ist, zum Steuern des Einspeisens, wobei
- die Einspeisesteuerungseinrichtung
- eine zentrale Steuereinheit (420) umfasst und/oder
- durch mehrere zur Kommunikation miteinander vorbereitete lokale Steuereinheiten (421, 422) der Einspeisesysteme (301, 302) und/oder der Einspeiseanlagen (311-315) realisiert ist, wobei
- die Einspeisesteuerungseinrichtung dazu vorbereitet ist, ein Verfahren gemäß einem der Ansprüche 1 bis 12 durchzuführen.

15. Einspeisesystem, insbesondere Windpark (301, 302),
- vorbereitet zum Ausführen eines Verfahrens nach einem der Ansprüche 1 bis 12, und/oder
- vorbereitet zur Verwendung als Einspeisesystem einer Einspeiseanordnung (300) nach Anspruch 13 oder 14.

16. Einspeiseanlage, insbesondere Windenergieanlage (311-315)
- vorbereitet zum Ausführen eines Verfahrens nach einem der Ansprüche 1 bis 12, und/oder
- vorbereitet zur Verwendung als Einspeiseanlage einer Einspeiseanordnung nach Anspruch 13 oder 14.
